# EUROPEAN PATENT SPECIFICATION

(11) **EP 3 697 172 B1**
(45) Date of publication and mention of the grant of the patent: **22.06.2022**
(21) Application number: 18892620.8
(22) Date of filing: 19.12.2018
(51) Int. Cl.: H04W 88/02, G06F 7/08, G06K 19/077

(54) **MEMORY CARD AND MOBILE TERMINAL**
SPEICHERKARTE UND MOBILES ENDGERÄT
CARTE MÉMOIRE ET TERMINAL MOBILE

(30) Priority: 22.12.2017 CN 201711409079; 03.04.2018 CN 201810288764; 30.06.2018 CN 201810703665
(43) Date of publication of application: 19.08.2020
(73) Proprietor: Huawei Technologies Co., Ltd., Guangdong 518129 (CN)
(72) Inventor: ZHOU, Jinhua, Shenzhen, Guangdong 518129 (CN)
(74) Representative: Pfenning, Meinig & Partner mbB
(86) International application number: PCT/CN2018/122051
(87) International publication number: WO 2019/120219

(56) References cited:
- WO-A1-2006/111781
- CN-A- 1 244 997
- CN-A- 1 362 824
- CN-Y- 200 950 255
- US-A1- 2007 300 001

## Description

### TECHNICAL FIELD

The present invention relates to the field of storage technologies, and in particular, to a memory card and a mobile terminal.

### BACKGROUND

In a current mobile phone design, to save space, a microSD memory card (which is commonly referred to as a mobile phone memory card, is a small memory card launched by the SD organization, and is a most commonly used memory card on a mobile phone currently) usually shares a same card slot with a nanoSIM (which is a SIM card standard, and is commonly referred to as a nanoSIM card) card. Shapes and pins of the microSD card and the nanoSIM card are totally different. In a conventional compatible design, two types of contact points are physically disposed in the card slot, to support insertion of the two cards. In addition, the mircoSD card is relatively large, and a card slot supporting the microSD card is much larger than a card slot supporting only the nanoSIM card. This is not beneficial for an architecture design of a mobile phone.

Document WO 2006/111781 A1 discloses a storage card having selectable contact elements, comprising: an interface having a plurality of contact elements, a storage card controller, being connected to at least a subset of said contact elements and a storage memory device, being connected to said storage card controller. Said storage card also comprises a switching unit, that is connected to said storage card controller and to at least one of said contact elements of said interface, wherein said storage card controller is connected to said switching unit to controllably select said at least one contact element.

Document US 2007/300001 A1 discloses a circuit arrangement comprising: a chip card controller comprising connections which can be used to access the chip card controller in accordance with the ISO standard and which can be connected to an ISO interface, the connections comprising at least one first connection which can be connected to the ISO interface via a switch device; and a further controller comprising at least one controller connection which is coupled to the switch device such that the first connection of the chip card controller can be connected to the controller connection via the switch device, wherein the switch device can be switched between a first and a second state, where in the first state the first connection of the chip card controller is connected to the ISO interface, and in the second state the first connection of the chip card controller is connected to the controller connection.

### SUMMARY

This application provides a memory card and a mobile terminal, to facilitate an architecture design of a mobile terminal and provide applicability.

According to a first aspect, an embodiment of this application provides a memory card according to claim 1. The memory card includes a card body, and a communications unit and a storage unit that are disposed on the card body. A plurality of connection pins are disposed on the card body, and the plurality of connection pins include a first connection pin, a second connection pin, and a third connection pin. The first connection pin is separately connected to the communications unit and the storage unit, the second connection pin is separately connected to the communications unit and the storage unit, and the third connection pin is connected to the communications unit.

The memory card further includes a first processor and a control switch, and the first processor is configured to control, by using the control switch, the first connection pin and the second connection pin to be connected to the communications unit or the storage unit. Further, the first processor is configured to: control, by using the control switch, the first connection pin and the second connection pin to be connected to the communications unit, control the communications unit to send a connection determining signal to a mobile terminal, and when no feedback signal of the mobile terminal is received, control the control switch to connect the first connection pin and the second connection pin to the storage unit.

In the foregoing implementation solution, the storage unit and the communications unit are disposed on one memory card, so that during use, only connections from the communications unit and the storage unit of the memory card to a mobile unit need to be switched to meet a communication requirement and a storage requirement, and no extra two cards need to be placed. This facilitates an architecture design of the mobile terminal and improves applicability of the mobile terminal. Specifically, the first processor detects whether there is a response for a data signal of the communications unit, and if there is no response, the first processor controls the control switch to perform switching, to connect the storage unit to the mobile terminal.

In a specific implementation solution, the control switch is a multi-way switch, one way of the multi-way switch is configured to control the first connection pin and the second connection pin to be connected to the communications unit, and another way is configured to control the first connection pin and the second connection pin to be connected to the storage unit. Therefore, switching can be implemented when the communications unit and the storage unit are connected to the mobile terminal. In a specific implementation solution, the first processor is further configured to: after read storage information of the mobile terminal is received, control the control switch to connect the first connection pin and the second connection pin to the storage unit.

In a specific implementation solution, the first connection pin is connected to a CLK signal cable of the communications unit, and the second connection pin is connected to a data signal cable of the communications unit.

In a specific implementation solution, the plurality of connection pins are located on a same side of the card body and form a ring shape. This facilitates disposition of the connection pins, and space on the card body is properly used.

According to a second example, which is not part of the invention, a memory card is provided. The memory card includes a card body, and a communications unit and a storage unit that are disposed on the card body. At least two connection pins are disposed on the card body, some of the connection pins are connected to the communications unit, and the other connection pins are connected to the storage unit.

In a specific implementation, there are eight connection pins, six of the connection pins are connected to the communications unit, and the other two connection pins are connected to the storage unit. The storage unit and the communications unit are connected to a mobile terminal by using different pins. In a specific implementation, an error prevention notch is disposed on one pin of the card body.

According to a third aspect, a mobile terminal according to claim 6 is provided. The mobile terminal includes a mobile terminal body, a second processor disposed in the mobile terminal body, and a selection switch connected to the second processor. A card slot is disposed in the mobile terminal body, and the memory card according to the first aspect is placed in the card slot. The second processor is configured to control the selection switch to select a communications unit or a storage unit to be connected to the mobile terminal.

In the foregoing implementation solution, the storage unit and the communications unit are disposed on one memory card, so that during use, only connections from the communications unit and the storage unit of the memory card to a mobile unit need to be switched to meet a communication requirement and a storage requirement, and no extra two cards need to be placed. This facilitates an architecture design of the mobile terminal and improves applicability of the mobile terminal.

In a specific implementation solution, pins electrically connected to the plurality of connection pins in a one-to-one correspondence are disposed in the card slot, and the selection switch is connected to the plurality of connection pins in a one-to-one correspondence. The memory card is connected to the mobile terminal through corresponding connections between the pins and the connection pins.

In a specific implementation solution, the second processor is further configured to: when determining that the mobile terminal is to read communication information, control the selection switch to connect a pin connected to the communications unit to the second processor.

In a specific implementation solution, the second processor is further configured to: when determining that the mobile terminal is to read storage information, control the selection switch to connect a pin connected to the storage unit to the second processor.

In a specific implementation solution, the selection switch is a multi-way switch, one way of the multi-way switch is configured to control, to be connected to the second processor, a pin that is in the plurality of pins and that is configured to be connected to the communications unit, and another way is configured to control, to be connected to the second processor, a pin that is in the plurality of pins and that is configured to be connected to the storage unit.

### BRIEF DESCRIPTION OF DRAWINGS

FIG. 1 is a schematic structural diagram of a memory card according to an embodiment of this application;
FIG. 2 is a schematic structural diagram of another memory card according to an embodiment of this application;
FIG. 3 is a schematic structural diagram of another memory card according to an embodiment of this application;
FIG. 4 is a schematic structural diagram of a mobile terminal according to an embodiment of this application; and
FIG. 5 is a schematic diagram of a connection between a mobile terminal and a memory card according to an embodiment of this application.

### DESCRIPTION OF EMBODIMENTS

To make objectives, technical solutions, and advantages of this application clearer, the following further describes this application in detail with reference to the accompanying drawings.

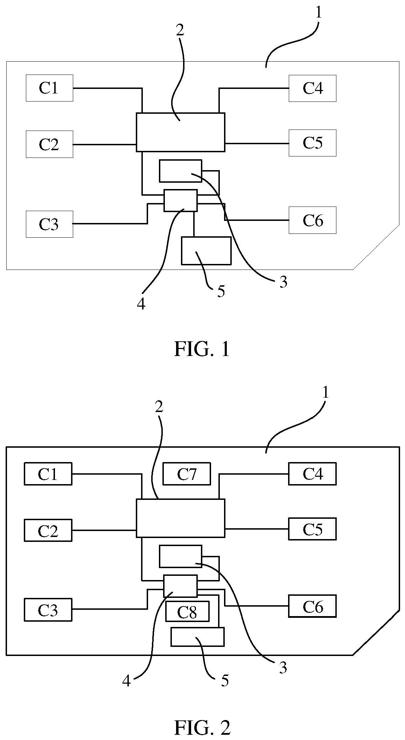

To resolve a prior-art problem that two cards need to be used for communication and storage, embodiments of this application provide a memory card. The memory card can meet both a communication requirement and a storage requirement. For details, refer to FIG. 1 and FIG. 2. FIG. 1 and FIG. 2 show two types of memory cards with different structures.

Each of the two types of memory cards shown in FIG. 1 and FIG. 2 includes a card body 1. The card body 1 is a carrier, and is configured to carry a communications unit 2 and a storage unit 3 that are disposed on the card body 1. In addition, a plurality of connection pins are further disposed on the card body 1. When a mobile terminal is connected to the memory card, a communications unit 2 and the storage unit 3 may be selectively connected to the mobile terminal. For example, when a connection pin connected to the communications unit 2 is connected to the mobile terminal, the memory card is used as a SIM card, and a communication function can be implemented. When a connection pin connected to the storage unit 3 is connected to the mobile terminal, the memory card has only a storage function. Therefore, an effect of performing two functions on one card is achieved, a card slot disposed on the mobile terminal is reduced, and applicability of the memory card is improved.

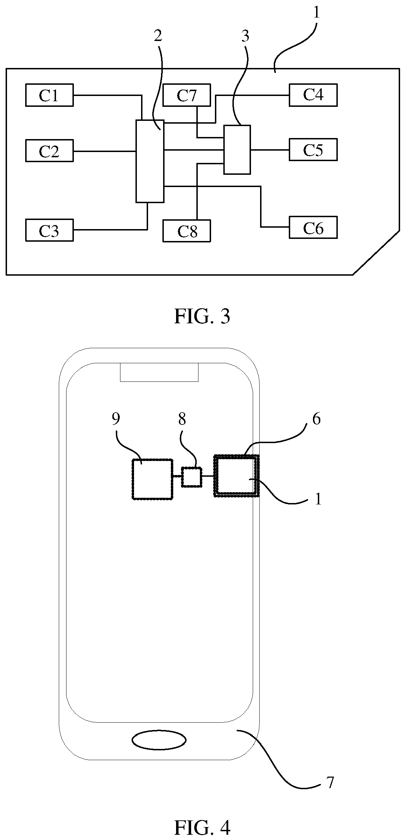

A structure and a principle of the memory card provided in the embodiments of this application are described below in detail with reference to FIG. 1 and FIG. 3. It should be understood that, in FIG. 1 to FIG. 3, to display a connection between a communications unit and a connection pin, and a connection between a storage unit and a connection pin, the communications unit and the storage unit are presented on the card body. However, in an actual design, the communications unit and the storage unit may not be located on a surface of the card body, but several connection pins on the surface of the card body are connected to the communications unit and the storage unit.

First, FIG. 1 shows a memory card according to an embodiment of this application. The memory card includes a card body 1, and a communications unit 2 and a storage unit 3 that are disposed on the card body 1. In addition, a plurality of connection pins are disposed on the card body 1. In a structure shown in FIG. 1, there are six connection pins, and the six connection pins may be located on a same side of the card body 1. In addition, during specific disposition, the connection pins may be arranged in different manners, for example, arranged in a ring shape, arranged in an array manner, or arranged in another implementable manner. This is not limited herein. However, the manner of disposing the connection pins on the same side facilitates disposition of the connection pins, and facilitates connections between the connection pins and a mobile terminal. In addition, space on the card body 1 is properly used by disposing the connection pins on the same side. This facilitates miniaturization of the card body 1. Certainly, the foregoing manner of disposing the connection pins is merely a specific implementation, and a plurality of connection pins may be alternatively disposed in a manner in which the plurality of connection pins are not disposed on a same side.

During specific disposition, there are a plurality of connection pins: a first connection pin, a second connection pin, and a third connection pin. The first connection pin is separately connected to the communications unit and the storage unit, the second connection pin is separately connected to the communications unit and the storage unit, and the third connection pin is connected to the communications unit. The six connection pins shown in FIG. 1 are used as an example. As shown in FIG. 1, in an embodiment, the six connection pins are respectively C1, C2, C3, C4, C5, and C6. Functions of the six connection pins are respectively: a VCC power supply, GND ground, RST reset, a CLK clock, Data data, and a Vpp/SWIO programming voltage bit. The connection pins C1 to C6 are all connected to the communications unit 2, so that a communication function can be implemented when the communications unit 2 is connected to the mobile terminal.

In the six connection pins, two of the six connection pins are used as a first connection pin and a second connection pin, and remaining four connection pins are used as third connection pins. During specific disposition, the first connection pin and the second connection pin may be any two of the connection pins C1 to C7. When the first connection pin and the second connection pin are connected to the storage unit 3, the first connection pin and the second connection pin are used as a D+ connection pin and a D- connection pin. In addition, when the first connection pin and the second connection pin are connected to the communications unit 2, in a specific implementation solution, as shown in FIG. 1, the first connection pin is connected to a CLK signal cable of the communications unit 2, and the second connection pin is connected to a data signal cable of the communications unit 2. In other words, the connection pin C3 and the connection pin C6 are respectively the first connection pin and the second connection pin, and C1, C2, C4, and C5 are the third connection pins. When the first connection pin and the second connection pin are connected to both the storage unit 3 and the communications unit 2, the first connection pin and the second connection pin need to be connected to the communications unit 2 when communication needs to be performed, and the first connection pin and the second connection pin need to be connected to the storage unit 3 when storage needs to be performed. To achieve this objective, a first processor (not shown in FIG. 1) and a control switch 4 are disposed on the memory card in this embodiment of this application. The first processor 5 is configured to control, by using the control switch 4, both the first connection pin and the second connection pin to be connected to the communications unit 2 or the storage unit 3. The first processor 5 controls the control switch 4 to perform switching, to connect the storage unit 3 or the communications unit 2 to the mobile terminal. During specific control, the first processor 5 is configured to: control, by using the control switch 4, the first connection pin and the second connection pin to be connected to the communications unit 2, control the communications unit 2 to send a connection determining signal to the mobile terminal, and when no feedback signal of the mobile terminal is received, control the control switch 4 to connect the first connection pin and the second connection pin to the storage unit 3. More specifically, the first processor 5 detects whether there is a response for a data signal of the communications unit, and if there is no response, the first processor 5 controls the control switch to perform switching, to connect the storage unit to the mobile terminal.

During specific disposition, different control switches may be used as the control switch 4, provided that switching between the communications unit 2 and the storage unit 3 can be implemented. In some embodiments, during specific switching, the first processor 5 first determines whether the communications unit 2 is connected to the mobile terminal. Specifically, when the memory card is inserted into the mobile terminal, the control switch 4 connects the first processor 5 to the communications unit 2, the first processor 5 determines whether the communications unit 2 is connected to the mobile terminal, and when the communications unit 2 is not connected to the mobile terminal, the first processor 5 controls the control switch 4 to perform switching, to connect the first connection pin and the second connection pin to the storage unit 3. In a specific implementation solution, the control switch 4 is a multi-way switch, one way of the multi-way switch is configured to control the first connection pin and the second connection pin to be connected to the communications unit, and another way is configured to control the first connection pin and the second connection pin to be connected to the storage unit. In this embodiment, there are two branches controlled by the multi-way switch, one branch is connected to the storage unit 3, and the other branch is connected to the communications unit 2, so as to perform switching between the communications unit 2 and the storage unit 3. During specific use, the first processor 5 detects whether there is a response for a data signal of the communications unit 2, and if there is no response, the first processor 5 controls the control switch 4 to perform switching, to connect the storage unit 3 to the mobile terminal. In addition, as shown in FIG. 2, eight connection pins may be alternatively disposed on the card body 1. In this case, a connection pin C7 and a connection pin C8 are idle connection pins, or the connection pin C7 and the connection pin C8 are respectively connected to C1 and C5. In addition, the first processor is further configured to: after read storage information of the mobile terminal is received, control the control switch to connect the first connection pin and the second connection pin to the storage unit.

As shown in FIG. 3, in an embodiment shown in FIG. 3, the memory card includes a card body 1, and a communications unit 2 and a storage unit 3 that are disposed on the card body 1. In addition, a plurality of connection pins are disposed on the card body 1, some of the connection pins are connected to the communications unit, and the other connection pins are connected to the storage unit. In a structure shown in FIG. 3, there are eight connection pins, and the eight connection pins are located on a same side of the card body 1. During specific disposition, the connection pins may be arranged in different manners, for example, arranged in a ring shape, arranged in an array manner, or arranged in another implementable manner. This is not limited herein. However, the manner of disposing the connection pins on the same side facilitates disposition of the connection pins, and facilitates connections between the connection pins and a mobile terminal. In addition, space on the card body 1 is properly used by disposing the connection pins on the same side. This facilitates miniaturization of the card body 1. Certainly, the foregoing manner of disposing the connection pins is merely a specific implementation, and a plurality of connection pins may be alternatively disposed in a manner in which the plurality of connection pins are not disposed on a same side.

As shown in FIG. 3, there are eight connection pins that are respectively C1 to C8, and the eight connection pins are separately configured to be connected to the communications unit 2 and the storage unit 3. As shown in FIG. 3, the connection pins C1 to C6 are connected to the communications unit 2, and functions of the connection pins are the same as those shown in FIG. 1. Details are not described herein again. The connection pin C7 and the connection pin C8 are separately connected to the storage unit 3, and are used as a D+ connection pin and a D- connection pin of the storage unit 3. When a communication connection is required, the mobile terminal is connected to the communications unit 2 by using the connection pins C1 to C6. When the storage unit 3 is required, the mobile terminal is connected to the storage unit 3 by using the connection pin C7 and the connection pin C8. It can be learned from the foregoing description that, when eight connection pins are used, the memory card does not need to be switched between the communications unit 2 and the storage unit 3, and only the mobile terminal needs to be switched to implement a connection.

It can be learned from the specific memory card implementations shown in FIG. 1 and FIG. 3 that, the storage unit 3 and the communications unit 2 are disposed on one memory card, so that during use, only connections from the communications unit 2 and the storage unit 3 of the memory card to a mobile unit need to be switched to meet a communication requirement and a storage requirement, and no extra two cards need to be placed. This facilitates an architecture design of the mobile terminal and improves applicability of the mobile terminal.

In addition, to prevent the memory card from being placed in the mobile terminal in an error direction, an error prevention notch may be disposed on one pin of the card body 1. Similarly, a structure fitting the error prevention notch is disposed on a card slot 6 of the mobile terminal.

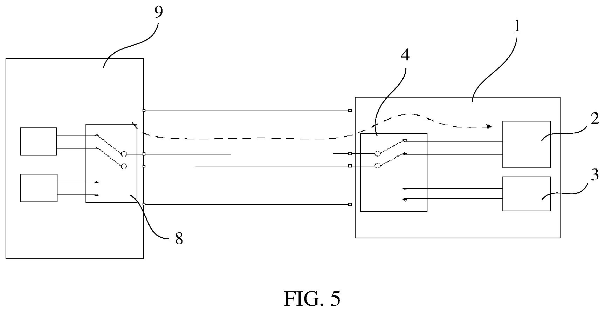

FIG. 4 is a schematic structural diagram of a mobile terminal according to an embodiment of this application, and FIG. 5 is a schematic diagram of a connection between a mobile terminal and a memory card 1 according to an embodiment of this application. An embodiment of this application further provides a mobile terminal. The mobile terminal includes a mobile terminal body 7, a second processor 9 disposed in the mobile terminal body 7, and a selection switch 8 connected to the second processor 9. A card slot 6 is disposed in the mobile terminal body 7, and any one of the foregoing memory cards 1 is placed in the card slot 6. The second processor 9 controls the selection switch 8 to select a communications unit 2 or a storage unit 3 to be connected to the mobile terminal.

During specific disposition, pins electrically connected to a plurality of connection pins in a one-to-one correspondence are disposed in the card slot 6, and the selection switch 8 is connected to the plurality of connection pins in a one-to-one correspondence. When there are six connection pins, there are eight corresponding pins. When there are eight connection pins, there are eight corresponding pins. In addition, in specific connections, the connection pins are connected to the pins in a one-to-one correspondence. Therefore, the memory card 1 is connected to the mobile terminal through corresponding connections between the pins and the connection pins.

When being used, the mobile terminal may select a connection to the communications unit 2 or the storage unit 3 of the memory card 1 based on a requirement. During specific implementation, selection is performed by using the selection switch 8, and the selection switch 8 is controlled by using the second processor 9. The second processor 9 is further configured to: when determining that the mobile terminal is to read communication information, control the selection switch 8 to connect a pin connected to the communications unit to the second processor 9. Specifically, the second processor 9 in the mobile terminal automatically performs determining and control based on a service scenario of a user on the terminal. When it is determined that the user is in a communication scenario, as shown by a dashed line in FIG. 5, the second processor 9 is connected to the communications unit 2. In addition, in a specific process, the second processor 9 controls the selection switch 8 to connect, to the second processor 9, a pin that is in the pins in the card slot 6 and that is connected to a connection pin connected to the communications unit 2 of the memory card 1, to implement a connection between the communications unit 2 of the memory card 1 and the mobile terminal. When storage needs to be performed, the second processor 9 is further configured to: when determining that the mobile terminal is to read storage information, control the selection switch 8 to connect a pin connected to the storage unit to the second processor 9. This operation is the same as the foregoing operation. In addition, in this process, when the memory card 1 has six connection pins, a first processor 5 in the memory card 1 detects whether there is a response for a data signal of the communications unit 2, and if there is no response, the first processor 5 controls a control switch 4 to perform switching, to connect the storage unit 3 to the mobile terminal.

Different selection switches 8 may be used as the selection switch 8, provided that switching can be performed according to an instruction of the second processor 9. In a specific implementation solution, the selection switch 8 is a multi-way switch. One way of the multi-way switch is configured to control, to be connected to the second processor 9, a pin that is in the plurality of pins and that is configured to be connected to the communications unit, and another way is configured to control, to be connected to the second processor 9, a pin that is in the plurality of pins and that is configured to be connected to the storage unit.

It can be learned from the foregoing description that the storage unit 3 and the communications unit 2 are disposed on one memory card 1 in the mobile terminal according to this embodiment of this application, so that during use, only connections from the communications unit 2 and the storage unit 3 of the memory card 1 to a mobile unit need to be switched to meet a communication requirement and a storage requirement, and no extra two cards need to be placed. This facilitates an architecture design of the mobile terminal and improves applicability of the mobile terminal.

## Claims

1. A memory card, comprising a card body (1), and a communications unit (2) and a storage unit (3) that are disposed on the card body, wherein a plurality of connection pins are disposed on the card body (1), the plurality of connection pins comprise a first connection pin, a second connection pin, and a third connection pin, the first connection pin is separately connected to the communications unit (2) and the storage unit (3), the second connection pin is separately connected to the communications unit (2) and the storage unit (3), and the third connection pin is connected to the communications unit (2), wherein
the memory card further comprises a first processor (5) and a control switch (4), wherein the first processor (5) is configured to control, by using the control switch (4), the first connection pin and the second connection pin to be connected to the communications unit (2) or the storage unit (3);
wherein the first processor (5) is configured to:
control, by using the control switch (4), the first connection pin and the second connection pin to be connected to the communications unit (2);
**characterized in that** the first processor (5) is further configured to
: control the communications
unit (2) to send a connection determining signal to a mobile terminal, and when no feedback signal of the mobile terminal is received, control the control switch (4) to connect the first connection pin and the second connection pin to the storage unit (3).

2. The memory card according to claim 1, wherein the first processor (5) is further configured to:
after read storage information of the mobile terminal is received, control the control switch (4) to connect the first connection pin and the second connection pin to the storage unit (3).

3. The memory card according to claim 1 or 2, wherein the control switch (4) is a multi-way switch, one way of the multi-way switch is configured to control the first connection pin and the second connection pin to be connected to the communications unit (2), and another way is configured to control the first connection pin and the second connection pin to be connected to the storage unit (3).

4. The memory card according to claim 1, wherein the first connection pin is connected to a CLK signal cable of the communications unit (2), and the second connection pin is connected to a data signal cable of the communications unit (2).

5. The memory card according to claim 4, wherein the plurality of connection pins are located on a same side of the card body (1) and form a ring shape.

6. A mobile terminal, comprising a mobile terminal body (7), a second processor (9) disposed in the mobile terminal body (7), and a selection switch (8) connected to the second processor (9), wherein a card slot is disposed in the mobile terminal body (2), the mobile terminal being **characterized in that** the memory card according to any one of claims 1 to 5 is placed in the card slot, and the second processor (9) is configured to control the selection switch (8) to select a communications unit (2) or a storage unit (3) to be connected to the mobile terminal.

7. The mobile terminal according to claim 6, wherein pins electrically connected to a plurality of connection pins in a one-to-one correspondence are disposed in the card slot, and the selection switch (8) is connected to the plurality of connection pins.

8. The mobile terminal according to claim 6, wherein the second processor (9) is further configured to: when determining that the mobile terminal is to read communication information, control the selection switch (8) to connect a pin connected to the communications unit (2) to the second processor (9).

9. The mobile terminal according to claim 6, wherein the second processor (9) is further configured to:
when determining that the mobile terminal is to read storage information, control the selection switch (8) to connect a pin connected to the storage unit (3) to the second processor (9).

10. The mobile terminal according to claim 6 or 7, wherein the selection switch (8) is a multi-way switch, one way of the multi-way switch is configured to control, to be connected to the second processor (9), a pin that is in the plurality of pins and that is configured to be connected to the communications unit (2), and another way is configured to control, to be connected to the second processor (9), a pin that is in the plurality of pins and that is configured to be connected to the storage unit (3).

## Patentansprüche

1. Speicherkarte, die einen Kartenkörper (1) und eine Kommunikationseinheit (2) sowie eine Speicherungseinheit (3), die auf dem Kartenkörper angeordnet sind, umfasst, wobei eine Vielzahl von Verbindungsstiften auf dem Kartenkörper (1) angeordnet ist, die Vielzahl von Verbindungsstifte, einen ersten Verbindungsstift, einen zweiten Verbindungsstift und einen dritten Verbindungsstift umfasst, der erste Verbindungsstift separat mit der Kommunikationseinheit (2) und der Speicherungseinheit (3) verbunden ist, der zweite Verbindungsstift separat mit der Kommunikationseinheit (2) und der Speicherungseinheit (3) verbunden ist, und der dritte Verbindungsstift mit der Kommunikationseinheit (2) verbunden ist, wobei
die Speicherkarte ferner einen ersten Prozessor (5) und einen Steuerschalter (4) umfasst, wobei der erste Prozessor (5) konfiguriert ist, um unter Verwendung des Steuerschalters (4) den ersten Verbindungsstift und den zweiten Verbindungsstift zu steuern, um mit der Kommunikationseinheit (2) oder der Speicherungseinheit (3) verbunden zu sein;
wobei der erste Prozessor (5) konfiguriert ist, um:
unter Verwendung des Steuerschalters (4), den ersten Verbindungsstift und den zweiten Verbindungsstift, die mit der Kommunikationseinheit (2) zu verbinden sind, zu steuern;
**dadurch gekennzeichnet, dass** der erste Prozessor (5) konfiguriert ist, um: [unleserlich] die Kommunikationseinheit (2) zu steuern, um ein Verbindungsbestimmungssignal an ein mobiles Endgerät zu senden, und wenn kein Rückkopplungssignal des mobilen Endgeräts empfangen wird, den Steuerschalter (4) zu steuern, um den ersten Verbindungsstift und den zweiten Verbindungsstift mit der Speicherungseinheit (3) zu verbinden.

2. Speicherkarte nach Anspruch 1, wobei der erste Prozessor (5) ferner konfiguriert ist, um:
nachdem gelesene Speicherungsinformationen des mobilen Endgeräts empfangen wurden, den Steuerschalter (4) zu steuern, um den ersten Verbindungsstift und den zweiten Verbindungsstift mit der Speicherungseinheit (3) zu verbinden.

3. Speicherkarte nach Anspruch 1 oder 2, wobei der Steuerschalter (4) ein Mehrwegeschalter ist, wobei ein Weg des Mehrwegeschalters konfiguriert ist, um den ersten Verbindungsstift und den zweiten Verbindungsstift, die mit der Kommunikationseinheit (2) zu verbinden sind, zu steuern, und ein anderer Weg konfiguriert ist, um den ersten Verbindungsstift und den zweiten Verbindungsstift dazu zu steuern, mit der Speicherungseinheit (3) verbunden zu werden.

4. Speicherkarte nach Anspruch 1, wobei der erste Verbindungsstift mit einem CLK-Signalkabel der Kommunikationseinheit (2) verbunden ist, und der zweite Verbindungsstift mit einem Datensignalkabel der Kommunikationseinheit (2) verbunden ist.

5. Speicherkarte nach Anspruch 4, wobei die Vielzahl von Verbindungsstiften auf einer gleichen Seite des Kartenkörpers (1) liegt und eine Ringform bildet.

6. Mobiles Endgerät, das einen mobilen Endgerätekörper (7), einen zweiten Prozessor (9), der in dem mobilen Endgerätekörper (7) angeordnet ist, und einen Auswahlschalter (8), der mit dem zweiten Prozessor (9) verbunden ist, umfasst, wobei eine Kartensteckplatz in dem Körper (2) des mobilen Endgeräts angeordnet ist, wobei das mobile Endgerät **dadurch gekennzeichnet ist, dass** die Speicherkarte nach einem der Ansprüche 1 bis 5 in dem Kartensteckplatz platziert ist, und der zweite Prozessor (9) konfiguriert ist, um den Auswahlschalter (8) zu steuern, um eine Kommunikationseinheit (2) oder eine Speicherungseinheit (3), die mit dem mobilen Endgerät zu verbinden ist, auszuwählen.

7. Mobiles Endgerät nach Anspruch 6, wobei Stifte, die elektrisch mit einer Vielzahl von Verbindungsstiften in einer Eins-zu-Eins-Entsprechung verbunden sind, in dem Kartenschlitz angeordnet ist, und der Auswahlschalter (8) mit der Vielzahl von Verbindungsstiften verbunden ist.

8. Mobiles Endgerät nach Anspruch 6, wobei der zweite Prozessor (9) ferner konfiguriert ist, um: wenn bestimmt wird, dass das mobile Endgerät Kommunikationsinformationen lesen soll, den Auswahlschalter (8) zu steuern, um einen Stift, der mit der Kommunikationseinheit (2) verbunden ist, mit dem zweiten Prozessor (9) zu verbinden.

9. Mobiles Endgerät nach Anspruch 6, wobei der zweite Prozessor (9) ferner konfiguriert ist, um:
wenn bestimmt wird, dass das mobile Endgerät Speicherungsinformationen lesen soll, den Auswahlschalter (8) zu steuern, um einen Stift, der mit der Speicherungseinheit (3) verbunden ist, mit dem zweiten Prozessor (9) zu verbinden.

10. Mobiles Endgerät nach Anspruch 6 oder 7, wobei der Auswahlschalter (8) ein Mehrwegschalter ist, wobei ein Weg des Mehrwegschalters dazu konfiguriert ist, einen Stift, der mit dem zweiten Prozessor (9) zu verbinden ist, der sich in der Vielzahl von Stiften befindet und der konfiguriert ist, um mit der Kommunikationseinheit (2) verbunden zu werden, zu steuern, und ein anderer Weg konfiguriert ist, um einen Stift, der sich in der Vielzahl von Stiften befindet und konfiguriert ist, um mit der Speichereinheit (3) verbunden zu werden, zu steuern, um mit dem zweiten Prozessor (9) verbunden zu werden.

## Revendications

1. Carte mémoire, comprenant un corps de carte (1), et une unité de communication (2) et une unité de stockage (3) qui sont disposées sur le corps de carte, dans laquelle une pluralité de broches de connexion sont disposées sur le corps de carte (1), la pluralité de broches de connexion comprennent une première broche de connexion, une deuxième broche de connexion et une troisième broche de connexion, la première broche de connexion est connectée séparément à l'unité de communication (2) et à l'unité de stockage (3), la deuxième broche de connexion est connectée séparément à l'unité de communication (2) et à l'unité de stockage (3), et la troisième broche de connexion est connectée à l'unité de communication (2), dans laquelle
la carte mémoire comprend en outre un premier processeur (5) et un commutateur de commande (4), dans laquelle le premier processeur (5) est configuré pour commander, en utilisant le commutateur de commande (4), la première broche de connexion et la deuxième broche de connexion à connecter à l'unité de communication (2) ou à l'unité de stockage (3) ;
dans laquelle le premier processeur (5) est configuré pour :
commander, en utilisant le commutateur de commande (4), la première broche de connexion et la deuxième broche de connexion à connecter à l'unité de communication (2) ;
**caractérisée en ce que** le premier processeur (5) est en outre configuré pour : commander l'unité de communication (2) afin d'envoyer un signal de détermination de connexion à un terminal mobile, et lorsqu'aucun signal de retour du terminal mobile n'est reçu, commander le commutateur de commande (4) afin de connecter la première broche de connexion et la deuxième broche de connexion à l'unité de stockage (3).

2. Carte mémoire selon la revendication 1, dans laquelle le premier processeur (5) est en outre configuré pour :
après réception des informations de stockage lues du terminal mobile, commander le commutateur de commande (4) afin de connecter la première broche de connexion et la deuxième broche de connexion à l'unité de stockage (3).

3. Carte mémoire selon la revendication 1 ou 2, dans laquelle le commutateur de commande (4) est un commutateur à plusieurs voies, une voie du commutateur à plusieurs voies est configurée pour commander la première broche de connexion et la deuxième broche de connexion à connecter à l'unité de communication (2), et une autre voie est configurée pour commander la première broche de connexion et la deuxième broche de connexion à connecter à l'unité de stockage (3).

4. Carte mémoire selon la revendication 1, dans laquelle la première broche de connexion est connectée à un câble de signal CLK de l'unité de communication (2), et la deuxième broche de connexion est connectée à un câble de signal de données de l'unité de communication (2).

5. Carte mémoire selon la revendication 4, dans laquelle la pluralité de broches de connexion sont situées sur un même côté du corps de carte (1) et forment une forme d'anneau.

6. Terminal mobile, comprenant un corps de terminal mobile (7), un second processeur (9) disposé dans le corps de terminal mobile (7) et un commutateur de sélection (8) connecté au second processeur (9), dans lequel un logement de carte est disposé dans le corps de terminal mobile (2), le terminal mobile étant **caractérisé en ce que** la carte mémoire selon l'une quelconque des revendications 1 à 5 est placée dans le logement de carte, et le second processeur (9) est configuré pour commander le commutateur de sélection (8) afin qu'il sélectionne une unité de communication (2) ou une unité de stockage (3) à connecter au terminal mobile.

7. Terminal mobile selon la revendication 6, dans lequel des broches connectées électriquement à une pluralité de broches de connexion dans une correspondance biunivoque sont disposées dans le logement de carte, et le commutateur de sélection (8) est connecté à la pluralité de broches de connexion.

8. Terminal mobile selon la revendication 6, dans lequel le second processeur (9) est en outre configuré pour : lors de la détermination que le terminal mobile doit lire des informations de communication, commander le commutateur de sélection (8) afin de connecter une broche connectée à l'unité de communication (2) au second processeur (9).

9. Terminal mobile selon la revendication 6, dans lequel le second processeur (9) est en outre configuré pour :
lors de la détermination que le terminal mobile doit lire des informations de stockage, commander le commutateur de sélection (8) afin de connecter une broche connectée à l'unité de stockage (3) au second processeur (9).

10. Terminal mobile selon la revendication 6 ou 7, dans lequel le commutateur de sélection (8) est un commutateur à plusieurs voies, une voie du commutateur à plusieurs voies est configurée pour commander, afin qu'elle soit connectée au second processeur (9), une broche qui est dans la pluralité de broches et qui est configurée pour être connectée à l'unité de communication (2), et une autre voie est configurée pour commander, afin qu'elle soit connectée au second processeur (9), une broche qui est dans la pluralité de broches et qui est configurée pour être connectée à l'unité de stockage (3).
